# EUROPEAN PATENT APPLICATION

(11) **EP 4 461 261 A1**
(43) Date of publication of application: **13.11.2024**
(21) Application number: 24382434.9
(22) Date of filing: 23.04.2024
(51) Int. Cl.: A61D 17/00, A01K 11/00

(54) **ANIMAL BIRTH NOTIFICATION DEVICE**

(30) Priority: 04.05.2023 ES 202330776 U
(71) Applicant: Ferrer Alcoceba, Marc, 08290 Cerdanyola del Vallès (ES)
(72) Inventor: Ferrer Alcoceba, Marc, 08290 Cerdanyola del Vallès (ES)
(74) Representative: Sánchez Paulino, Francisco Javier

(57) **Abstract**

Animal birth notification device, consisting of at least one measuring device, at least one server and at least one control interface. The measuring device is attached to the pregnant animal and collects data such as acceleration, positioning, pulse and geolocation, which are then sent to the server for processing. The server, in turn, sends an alert to the control interface, notifying the user of the proximity of the animal's birth.

## Description

### PURPOSE OF THE INVENTION

The purpose of this invention, as the title establishes, is an animal birth notification device which gives prior warning as to the birth of animal. This is an innovation that, within the scope of current technology, offers benefits that were previously unknown.

This invention is distinguished by the special functional and constructive characteristics of the elements that form part of the device, in such a way that they all contribute to the realisation of an animal birth notification device.

### TECHNOLOGICAL SECTOR

Thus, this invention falls within the scope of animal care and breeding devices, and particularly within the scope of those used for managing animal pregnancy.

### BACKGROUND OF THE INVENTION

Labour is one of the most important moments in animal pregnancy. It is the conclusion of the entirety of a process in which life is created. It is crucial that at this stage, the animal is under supervision and monitored, in order to ensure the offspring's successful delivery.

When the animal is ready to give birth to its young, it exhibits different hormonal and behavioural signs.

Keep in mind that labour can last several hours. For a cow that has previously given birth, labour lasts on average between 2 to 4 hours. For a cow that is pregnant for the first time, this rises to an average of between 3 to 6 hours.

There is no rush to attend to the animal. The animal will take care of delivering its offspring on its own. However, great attention should still be paid to the animal, in case help is needed.

It is normal that during the hours before delivery or throughout the course of the day, the animal may be restless, in pain, and may even give small kicks to its belly as the contractions and pain worsen.

Another important aspect to keep in mind is that if the animal has not expelled all of the foetal membranes within a few hours of giving birth, the veterinarian or expert who is monitoring the animal must intervene in order to preserve the life of the newborn and mother.

With regard to the current technology available, it should be noted that, although different designs of animal birth alert systems are known, none of these have structural and constitutive technical characteristics equal or similar to those displayed by the invention claimed herein.

### EXPLANATION OF THE INVENTION

The invention consists of an animal birth notification device which is placed on the animal's tail and provides constant monitoring of their contractions and pulse. The user has access to visual information which records when and how strong the animal's contractions have been, in order to predict the proximity of the birth.

More specifically and as noted above, the invention is an animal birth notification device consisting of at least one measuring device which is attached to the animal and collects data such as the animal's position, acceleration and pulse. The device is also connected to at least one server which receives the data collected by the measuring device, and at least one control interface which receives the information and alerts about the animal's labour.

This way, each animal is monitored. When the measuring device estimates that the animal's labour is imminent, it sends a warning to the server, which in turn forwards it to the control interface as an alert, and thus notifies the user that one of their animals is about to give birth, so that they may offer them the necessary care. The user will also be able to monitor the status of their animal at all times.

Unless otherwise indicated, all of the technical and scientific components used in this report have the same meaning as that usually understood by an expert in the sector to which this invention belongs.

### BRIEF DESCRIPTION OF THE DRAWINGS

With the aim of completing this description and facilitating a better understanding of the invention's characteristics, this descriptive report is accompanied by several drawings, which are an integral part of the same. The figures are for illustrative purposes and are not limiting. They represent the following:

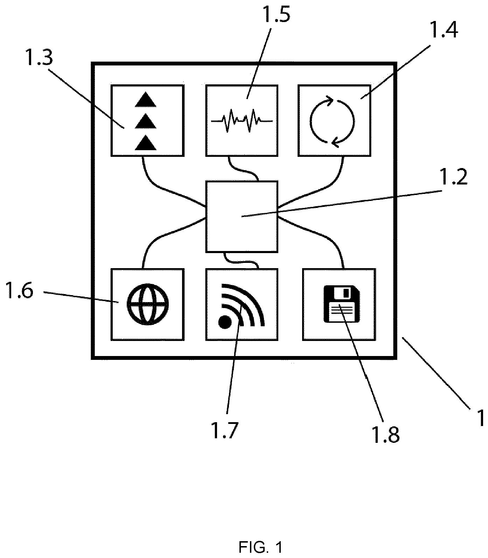

Figure 1 is a schematic representation of the measuring device (1).

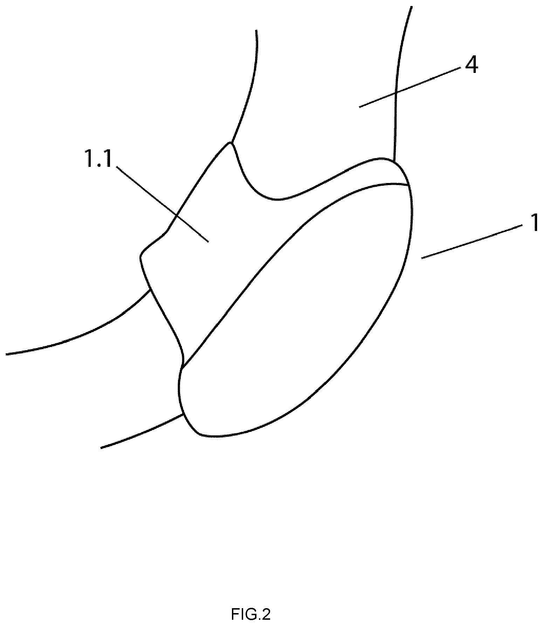

Figure 2 is a perspective representation of the measuring device (1), fitted to an animal (4).

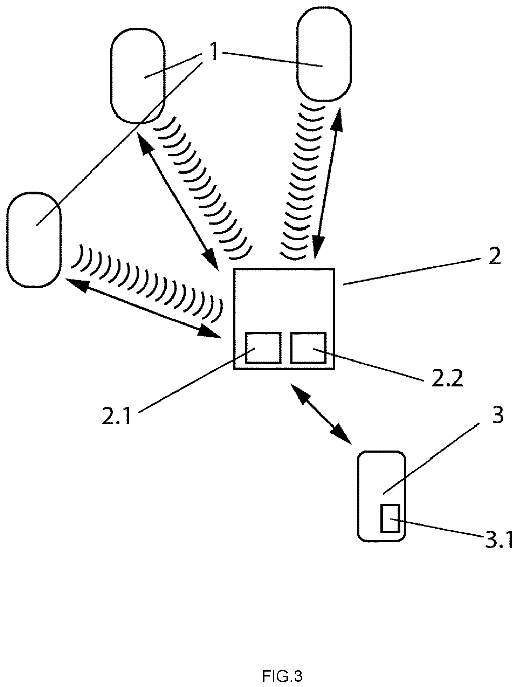

Figure 3 is a schematic representation of the animal birth alert device.

### PREFERRED IMPLEMENTATION OF THE INVENTION

In view of the aforementioned drawings, a preferred, but non-limiting use of the proposed invention is described below, which consists of an animal birth notification device.

As can be seen in the figures, the animal birth notification device is comprised of at least three main parts: at least one measuring device (1), at least one server (2) and at least one control interface (3).

The measuring device (1) is affixed to the tail of the pregnant animal (4) using various methods of attachment (1.1). It consists of a programmable logic controller (1.2), an accelerometer (1.3) configured to measure the acceleration of the measuring device (1), a gyroscope (1.4), programmed to measure the positioning of the measuring device (1), a pulse meter (1.5) set to measure the pulse rate of the animal (4), various means of geolocation (1.6), designed to measure the overall position of the measuring device (1), as well as communication media (1.7) linked with the server (2) configured to transmit information to and receive information from the server (2).

The programmable logic controller (1.2) is configured to compare the measurements made by: the accelerometer (1.3), the gyroscope (1.4) and the pulse meter (1.5). It uses parameters previously set from the server (2) to estimate the proximity of the animal's (4) delivery, as well as the animal's location according to the means of geolocation (1.6), which it sends via the communication media (1.7) on the measuring device (1) to the server (2). The parameters set for estimating the proximity of the animal's birth can be modified.

In addition, the server (2) is linked to one or more measuring devices (1), as well as to one or more control interfaces (3). It consists of various information storage media (2.1) programmed to store the information received from the measuring devices (1) and the control interfaces (3), as well as communication media (2.2), which are configured to send and receive information from the measuring devices (1) and the control interfaces (3).

The information stored in the information storage media (2.1) can be in a record format, and is sent to the control interfaces (3).

The control interfaces (3) are carried by users, and are programmed to primarily display an estimation of the proximity of the animal's (4) birth as an alert, as well as the information kept in the information storage media (2.1) via a visual display. The control interfaces (3) also include communication media (3.1) that are programmed to send and receive information from the server (2).

Depending on the manner of implementation, the measuring devices (1) can also include auxiliary information storage media (1.8) that store the information sent to the server (2).

Additionally, the control interfaces (3) preferably consist of an electronic device such as a Smartphone, tablet or similar, equipped with a specific software application.

Having sufficiently described the nature of this invention, as well as how to use it, further explanation is not considered necessary for any expert on the subject to understand its scope and benefits. It is also noted that, within its essential nature, the device may be implemented in other ways which differ from the one described by way of example. The protection sought shall equally apply in these cases, provided that its fundamental principle is not altered, changed or modified.

## Claims

1. Animal birth notification device, distinguished by its three main parts: at least one measuring device (1), at least one server (2) and at least one control interface (3).
The measuring device (1) is affixed to the tail of the pregnant animal (4) using various methods of attachment (1.1). It consists of a programmable logic controller (1.2), an accelerometer (1.3) configured to measure the acceleration of the measuring device (1), a gyroscope (1.4), programmed to measure the positioning of the measuring device (1), a pulse meter (1.5) set to measure the pulse rate of the animal (4), various means of geolocation (1.6), designed to measure the overall position of the measuring device (1), as well as communication media (1.7) linked with the server (2) configured to transmit information to and receive information from the server (2).
In addition, the server (2) is linked to one or more measuring devices (1), as well as to one or more control interfaces (3). It consists of various information storage media (2.1) programmed to store the information received from the measuring devices (1) and the control interfaces (3), as well as communication media (2.2), which are configured to send and receive information from the measuring devices (1) and the control interfaces (3).
The control interfaces (3) are carried by users, and are programmed to primarily display an estimation of the proximity of the animal's (4) birth as an alert, as well as the information kept in the information storage media (2.1) via a visual display. The control interfaces (3) also include communication media (3.1) that are programmed to send and receive information from the server (2).

2. Animal birth notification device which, according to the preceding claim, is distinguishable because the measuring device (1) includes various means of geolocation (1.6), designed to measure the overall position of the measuring device (1) and send this information via the communication media (1.7) from the measuring device (1) to the server (2).

3. Animal birth notification device which, according to any of the preceding claims, is distinguishable because the information stored in the information storage media (2.1) is in a record format and is sent to the control interface (3).

4. Animal birth notification device which, according to any of the preceding claims, is distinguishable because the measuring device (1) includes some auxiliary information storage media (1.8).

5. Animal birth notification device which, according to any of the preceding claims, is distinguishable because the control interfaces (3) are electronic devices, such as Smartphones, tablets or similar, equipped with a specific software application.
